**Europäisches Patentamt**

**European Patent Office**

**Office européen des brevets**

(19)

(11) Numéro de publication : **0 013 347**
**B1**

(12) **FASCICULE DE BREVET EUROPÉEN**

(45) Date de publication du fascicule du brevet :
13.07.83

(51) Int. Cl.³ : **G 06 F 13/00**

(21) Numéro de dépôt : **79104895.2**

(22) Date de dépôt : **04.12.79**

(54) **Dispositif à mémoire intermédiaire pour le transfert des données entre un processeur et un dispositif d'entrée/sortie.**

(30) Priorité : **28.12.78 US 973938**

(43) Date de publication de la demande :
**23.07.80 Bulletin 80/15**

(45) Mention de la délivrance du brevet :
**13.07.83 Bulletin 83/28**

(84) Etats contractants désignés :
**DE FR GB**

(56) Documents cités :
**DE A 2 802 160**
**US A 3 059 221**
**US A 3 665 416**

**ELECTRONIC INDUSTRIES, juin 1966, pages 60-63, Radnor, US COX : « Communication between two asynchronous systems »**

**IEEE PROCEEDINGS OF THE ANNUAL SYMPOSIUM ON COMPUTER ARCHITECTURE, 23-25 mars 1977, pages 159-164, Long Beach, US PARKER « Hardware/Software tradeoffs in a variable word with variable queue length buffer memory »**

(73) Titulaire : **International Business Machines Corporation**
**Old Orchard Road**
**Armonk, N.Y. 10504 (US)**

(72) Inventeur : **Heath, Chester A.**
**681 NE 30th Place**
**Boca Raton, Florida 33431 (US)**

(74) Mandataire : **Bonneau, Gérard**
**COMPAGNIE IBM FRANCE Département de Propriété Industrielle**
**F-06610 La Gaude (FR)**

Dispositif à mémoire intermédiaire pour le transfert des données entre un processeur et un dispositif d'entrée/sortie

## Description

### Domaine Technique

La présente invention concerne un dispositif à mémoire intermédiaire de données de capacité variable pour commander le transfert des données entre un processeur et des dispositifs d'entrée/sortie.

### Etat de la Technique Antérieure

Les systèmes de traitement de données dans lesquels des dispositifs d'entrée/sortie sont utilisés pour entrer des données dans le système et pour retirer les données générées par celui-ci, utilisent d'une manière classique, des mémoires intermédiaires de données pour les données délivrées au dispositif d'entrée/sortie (E/S) ou retirées de celui-ci. Dans les systèmes de traitement de données dont le dispositif E/S est une unité à bande magnétique, il est nécessaire que la mémoire intermédiaire délivre des données à une vitesse de transfert compatible avec la vitesse d'enregistrement de l'unité à bande magnétique. Étant donné qu'il existe de nombreux autres dispositifs E/S requérant des données de l'unité de traitement centrale ou processeur et que la vitesse de transfert des données du processeur est plus élevée que la vitesse de l'unité à bande magnétique, une mise en mémoire intermédiaire des données est nécessaire.

Certains dispositifs à mémoire intermédiaires développés antérieurement utilisent des dispositifs d'emmagasinage intermédiaires de capacité fixe tels que la mémoire intermédiaire du type FIFO (premier entré - premier sorti) et la mémoire intermédiaire FIFO double dite du type « ping-pong ». Un autre système à mémoire intermédiaire est décrit dans le US-A 4 125 870. Ces systèmes développés antérieurement utilisant des mémoires intermédiaires FIFO de capacité fixe introduisent un retard fixe dans le courant des données transférées du processeur au dispositif E/S. Un inconvénient supplémentaire rencontré avec ce type de dispositifs de l'art antérieur réside dans le fait que ces mémoires intermédiaires doivent être initialement remplies avant l'application d'un ordre d'écriture au dispositif E/S. La quantité de données qu'il est nécessaire de retenir dans une mémoire intermédiaire au début de l'opération d'écriture varie suivant l'application du système de traitement. Pour des agencements à mémoires intermédiaires fixes, il est généralement nécessaire de remplir toute la mémoire intermédiaire bien que le dispositif E/S puisse ne pas requérir cette quantité de données pour commencer l'opération d'écriture.

D'autres dispositifs à mémoire intermédiaire ont essayé de résoudre ces problèmes en utilisant une mémoire intermédiaire à deux niveaux de remplissage. Un premier niveau bas détermine le seuil à partir duquel la mémoire intermédiaire peut être remplie et un deuxième niveau haut détermine le seuil à partir duquel la mémoire intermédiaire peut être vidée. Des exemples de tels dispositifs sont décrits dans les brevets US-A-3 059 221 et 3 665 416, le brevet DE-A-2 802 160, l'article « Communication Between Two Synchronous Systems » paru dans la revue « Electronic Industries » de juin 1966, pages 60-63 et l'article « Hardware/Software Tradeoffs in a Variable Word Width, Variable Queue Length Buffer Memory » paru dans « IEEE Proceedings » du 23-25 mars 1977, pages 159-164. Les deux derniers articles mentionnent aussi la possibilité d'altération d'un seuil et de reprogrammation sans proposer de solution.

Bien que présentant plus de souplesse que les mémoires intermédiaires de capacité fixe du fait qu'il n'est pas nécessaire de remplir toute la mémoire intermédiaire pour commencer à transmettre les données vers le dispositif récepteur, ces dispositifs présentent toutefois un certain nombre d'inconvénients. Ainsi dans l'article paru dans « Electronic Industries » le remplissage de la mémoire intermédiaire donne lieu à deux signaux de commande : un signal défini par un seuil d'emmagasinage (BFE) à partir duquel les données contenues dans la mémoire peuvent commencer à être transférées, et un signal (BE) indiquant que la mémoire est vide et qu'il faut la remplir. Par conséquent, si la quantité de données à transmettre représente plusieurs fois la capacité définie par le seuil d'emmagasinage (BFE), il faudra attendre une ou plusieurs fois que des données soient emmagasinées dans la mémoire intermédiaire en réponse au signal indicatif de mémoire vide avant de procéder au transfert de données vers le dispositif récepteur. Ceci présente l'inconvénient d'introduire un délai de remplissage de la mémoire intermédiaire. Si, en outre, le dispositif récepteur est un dispositif d'entrée/sortie tel qu'un dispositif à bande magnétique, à ce délai vient s'ajouter le délai de démarrage du dispositif d'entrée/sortie.

### Exposé de l'Invention

Il est ainsi apparu nécessaire d'avoir une mémoire intermédiaire de données dont on puisse réduire au minimum les délais de remplissage et un dispositif E/S dont on puisse réduire les délais de démarrage/arrêt pour des applications et dans des conditions différentes. Une telle mémoire intermédiaire de données doit être dynamiquement ajustable pour supprimer les problèmes liés aux mémoires intermédiaires de capacité fixe.

Le dispositif de la présente invention telle qu'elle est caractérisée dans les revendications comporte une mémoire intermédiaire de données de capacité variable emmagasinant des données qui sont transférées entre un processeur et un dispositif E/S.

La mémoire intermédiaire de données comporte un seul seuil d'emmagasinage qui lorsqu'il est atteint provoque la commande de transfert des données de la mémoire intermédiaire au dispositif d'entrée/sortie, alors que des données sont transférées du processeur à la mémoire intermédiaire dès que la quantité de données est au-dessous du seuil d'emmagasinage. En outre, ce seuil d'emmagasinage est dynamiquement ajustable par les signaux de commande du processeur. Ces deux caractéristiques permettent de réduire au minimum les délais de remplissage de la mémoire ainsi que les délais de démarrage/arrêt du dispositif d'entrée/sortie.

Le dispositif de la présente invention comprend un moyen de seuil définissant un seuil d'emmagasinage de données correspondant à un remplissage du moyen d'emmagasinage inférieur à la capacité d'emmagasinage maximale de ce dernier, et fournissant un signal de contrôle représentant la capacité d'emmagasinage correspondant au seuil d'emmagasinage en réponse à un signal de commande en provenance du processeur déterminant cette capacité, un premier compteur déterminant la quantité de données transférées du processeur au moyen d'emmagasinage de données, un deuxième compteur déterminant la quantité de données transmises au dispositif E/S à partir du moyen d'emmagasinage de données, un moyen d'inventaire pour déterminer la différence entre la quantité de données emmagasinées dans le moyen d'emmagasinage de données et la quantité de données transmises au dispositif E/S en réponse auxdits premier et deuxième compteurs, et de façon à générer un signal représentant cette différence, un moyen de commande de données pour entrer des données dans le moyen d'emmagasinage lorsque la quantité de données emmagasinées est inférieure à la quantité de données représentées par le signal de contrôle, un moyen de comparaison pour comparer le signal de contrôle et le signal de différence, et générer un signal de transfert lorsque le signal de contrôle est égal au signal de différence, et un moyen de transfert pour transmettre des données du moyen d'emmagasinage au dispositif E/S, en réponse au signal de transfert de sorte qu'une quantité de données prédéterminée est maintenue dans le moyen d'emmagasinage pendant que simultanément a lieu le transfert des données entre le processeur et le dispositif E/S.

## Brève Description des Figures

La figure 1 est un schéma bloc d'un système de traitement de données comprenant le dispositif à mémoire intermédiaire de la présente invention.

La figure 2 est un schéma plus détaillé du dispositif à mémoire intermédiaire de la présente invention.

La figure 3 est un schéma logique détaillé d'une partie de la figure 2.

La figure 4 est un schéma logique de la commande du dispositif représentée schématiquement à la figure 2.

La figure 5 est un schéma logique de la commande d'inventaire représentée schématiquement à la figure 2, et

La figure 6 est un schéma logique de la commande de transfert représentée schématiquement à la figure 2.

## Mode de Réalisation Préféré de l'Invention

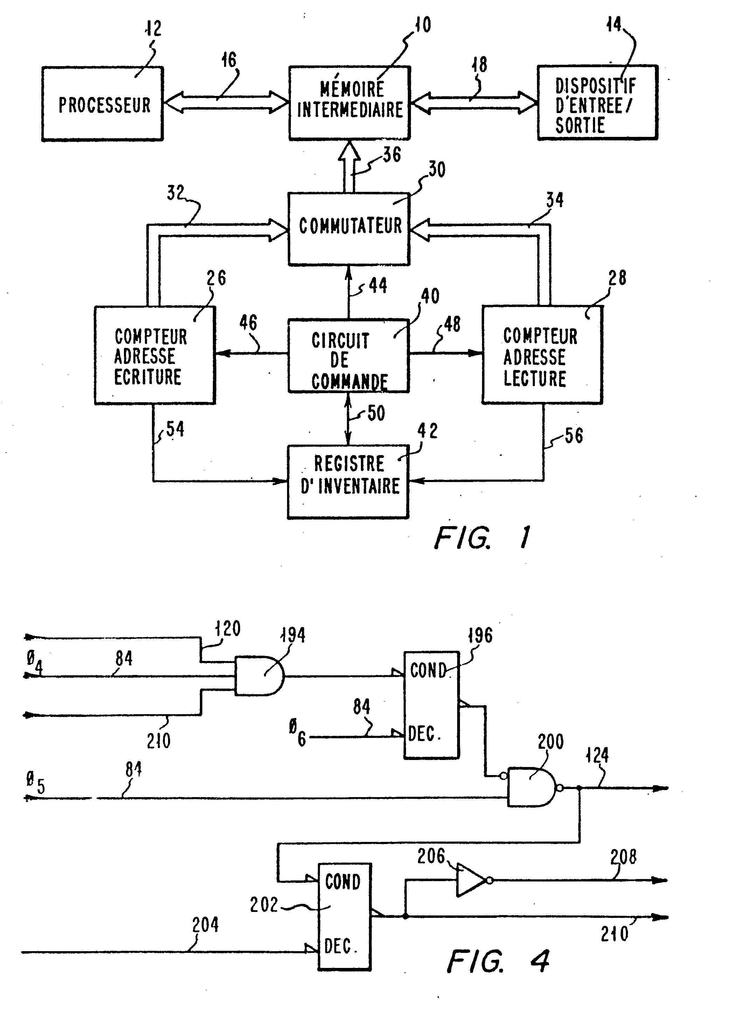

La figure 1 représente le dispositif à mémoire intermédiaire de données comprenant un dispositif d'emmagasinage ou mémoire intermédiaire 10 interconnecté entre un processeur 12 et un dispositif d'entrée/sortie (E/S) 14. Les données sont délivrées au processeur 12 depuis la mémoire intermédiaire de données 10 et délivrées à la mémoire intermédiaire 10 depuis le processeur 12 par l'intermédiaire d'un bus de données bidirectionnel 16. Les données sont transférées entre la mémoire intermédiaire 10 et le dispositif E/S 14 par l'intermédiaire du bus de données bidirectionnel 18. Le processeur 12 peut comprendre, par exemple, un calculateur IBM Série 1 Modèle 5, qui est décrit dans le Manuel IBM intitulé « Séries/1 Model 5, 4955 Processor Description », IBM N°. GA34-0021 (première édition, novembre 1976), et dans le Manuel IBM intitulé « Séries/1, 4955 Processor Theory », IBM N°. SY34-0041 (première édition, janvier 1977). Le dispositif E/S 14 est caractérisé comme constituant une ressource réutilisable en série à fonctionnement synchrone sans mémoire et à redémarrage difficile. Un tel dispositif E/S peut comporter par exemple une bande magnétique, un disque souple ou un réseau de télétraitement.

On trouve associés à la mémoire intermédiaire 10, un registre/compteur d'adresses d'écriture 26 et un registre/compteur d'adresses de lecture 28. Le registre/compteur d'adresses d'écriture 26 délivre des informations d'adresses à un commutateur 30 par l'intermédiaire d'un bus d'adresses 32. Les données transférées du processeur 12 à la mémoire intermédiaire 10 sont chargées à une adresse indiquée par le registre/compteur d'adresses d'écriture 26. D'une manière similaire, les données transférées de la mémoire intermédiaire 10 au dispositif E/S 14 passent par le bus de données 18 et sont lues à une adresse indiquée par le registre/compteur d'adresses de lecture 28. Le commutateur 30 applique l'adresse communiquée soit par le registre/compteur d'adresses d'écriture 26, soit par le registre/compteur d'adresses de lecture 28 par le bus de données 36, à la mémoire intermédiaire de données 10. Le commutateur 30 assure la sélection pendant le cycle d'écriture, de l'adresse d'écriture délivrée par le registre/compteur d'adresses d'écriture 26 et sélectionne, pendant le cycle de lecture, l'adresse de lecture délivrée par le registre/compteur d'adresses de lecture.

La figure 1 représente en outre un circuit de commande 40 et un registre/compteur d'inventaire 42 associé au dispositif à mémoire intermédiaire de capacité variable de la présente invention. Le circuit de commande 40 délivre des signaux au commutateur 30 par la ligne de signaux 44, au registre/compteur d'adresses d'écriture 26 par la ligne de signaux 46, au registre/compteur d'adresses de lecture 28 par la ligne de signaux 48 et au registre/compteur d'inventaire 42 par la ligne de signaux 50. Le registre/compteur d'inventaire 42 reçoit des signaux du registre/compteur d'adresses d'écriture 26 par la ligne 54 et du registre/compteur d'adresses de lecture 28 par la ligne 56. Le registre/compteur d'inventaire 42 communique également avec le circuit de commande 40 par la ligne 50.

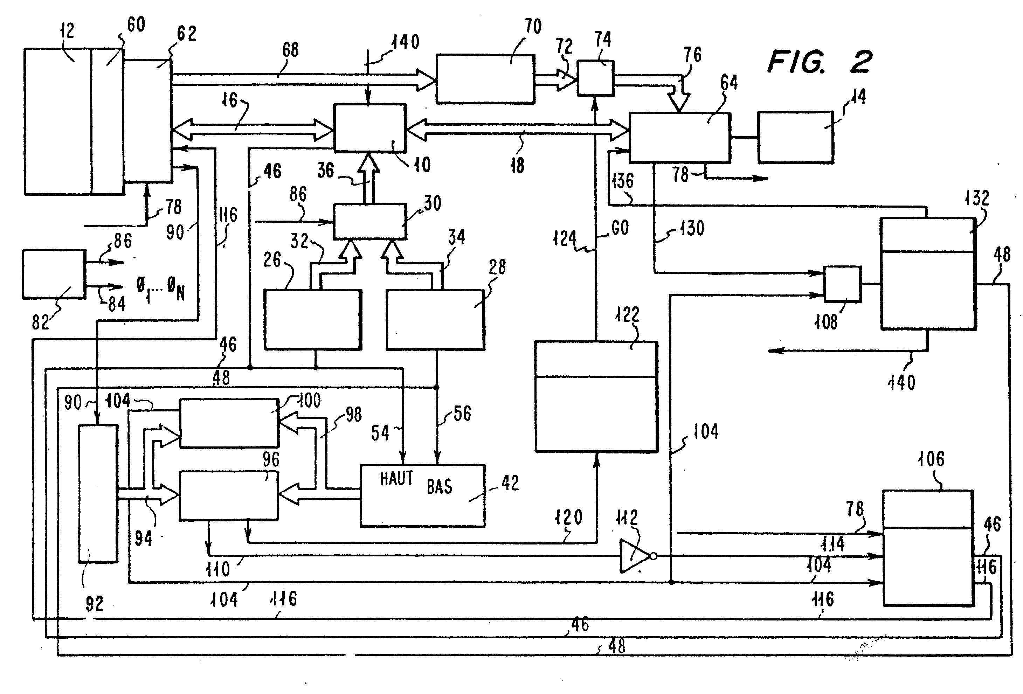

Comme on le verra ultérieurement à la figure 2, le circuit de commande 40 (fig. 1) et le registre/compteur d'inventaire 42 assurent le maintien d'une quantité prédéterminée ou d'un « inventaire » des données instantanément présentes dans la mémoire intermédiaire 10 tandis que des données sont transférées du processeur 12 à la mémoire intermédiaire 10 et de celle-ci, au dispositif E/S 14. La quantité de données contenue dans la mémoire intermédiaire 10 pendant le fonctionnement du système, est pré-sélectionnée à une valeur inférieure à la capacité d'emmagasinage maximale de la mémoire intermédiaire 10. Cette possibilité d'ajustement dynamique du fonctionnement de la mémoire intermédiaire 10 réduit ses délais de remplissage au minimum et lui permet de s'adapter à différentes configurations de système.

Le circuit de commande 40 et le registre/compteur d'inventaire 42 combinés au registre/compteur d'adresses d'écriture 26 et au registre/compteur d'adresses de lecture 28, assurent le maintien de l'inventaire dans la mémoire intermédiaire 10 à une valeur prédéterminée entre les données appliquées à la mémoire intermédiaire 10 et les données sorties de celle-ci. Le transfert des données au dispositif E/S 14 n'est pas autorisé si la valeur d'inventaire est nulle ou inférieure à la valeur de seuil prédéterminée. Le transfert des données est autorisé, de la mémoire intermédiaire 10 au dispositif E/S 14, lorsque la quantité de données transférée dans la mémoire intermédiaire 10 est égale à la valeur de seuil. La présente invention permet au circuit de commande 40 et au registre/compteur d'inventaire 42 de commander dynamiquement la taille de la mémoire intermédiaire 10 pour la meilleure adaptation possible de celle-ci aux diverses configurations de système.

La figure 2 est un schéma logique détaillé du dispositif à mémoire intermédiaire de capacité variable de la présente invention dans lequel les éléments précédemment identifiés sont affectés des mêmes références. Le processeur 12 comprend une mémoire associée 60 et une interface de canaux 62. Les données sont transférées entre l'interface de canaux 62 et la mémoire intermédiaire 10 par le bus de données 16, comme décrit précédemment. La mémoire intermédiaire 10 est présentée à la figure 2 sous la forme d'une mémoire intermédiaire à accès aléatoire (RAM). Cependant, la mémoire intermédiaire 10 peut aussi comprendre, par exemple, un réseau de registres, une pile de registres « premier entré — premier sorti » ou tout autre élément similaire. Les données sont transférées entre la mémoire intermédiaire 10 et l'unité de commande de dispositif 64 associée au dispositif E/S 14 par le bus de données 18.

L'interface de canaux 62 délivre un ordre de 8 bits par le bus de données 68 au registre d'ordres 70. La sortie du registre d'ordres 70 est appliquée par un bus de données 72 à un circuit ET 74 dont la sortie est appliquée par un bus de données d'ordres 76 à l'unité de commande de dispositif 64. Les informations emmagasinées dans le registre d'ordres 70 sont appliquées à l'unité de commande de dispositif 64 pour l'informer d'une écriture avant, d'une lecture arrière, d'une lecture avant, d'un ré-enroulement, d'un passage hors ligne ou d'une écriture en mémoire lorsque le dispositif E/S 14 est un dispositif à bande magnétique. L'unité de commande 64 génère un signal de sortie TRANSFERT TERMINE par la ligne de signaux 78, qui est appliquée à l'interface de canaux 62. Ce signal indique au processeur 12 que la quantité de données emmagasinée dans la mémoire intermédiaire 10 a été transférée du processeur 12 au dispositif E/S 14.

La figure 2 représente également une horloge 82 qui génère les signaux de chronologie nécessaires Phase 1 à Phase N par les lignes 84 pour maintenir la synchronisation des divers composants du circuit. L'horloge 82 génère également le signal CYCLE LECTURE/ECRITURE appliqué par la ligne 86 au commutateur 30 pour commander l'application de l'adresse d'écriture ou de l'adresse de lecture du registre/compteur d'adresses d'écriture 26 et du registre/compteur d'adresses de lecture 28 à la mémoire intermédiaire 10.

La mémoire 60 associée au processeur 12 contient une valeur de seuil d'inventaire pouvant être sélectionnée par le programme du processeur 12 pour déterminer la part ou le pourcentage de la capacité d'emmagasinage totale de la mémoire intermédiaire 10 qui sera utilisé. Cette valeur de seuil d'inventaire est délivrée par l'interface de canaux 62 et la ligne 90 à un registre 92. Dans la réalisation préférée, le processeur 12 délivre par l'intermédiaire de la mémoire 60, de l'interface de canaux 62 et de la ligne 90, une valeur à 2 bits pour représenter 0, 1/16, 9/16 ou 15/16 de la capacité d'emmagasinage totale de la mémoire intermédiaire 10.

La sortie du registre 92 est appliquée par un bus de données 94 à un circuit de comparaison 96. La sortie du registre/compteur d'inventaire 42 est appliquée par un bus de données 98 aux circuits de comparaison 96 et 100. Le registre/compteur d'inventaire 42 est incrémenté par une sortie du registre/compteur d'adresses d'écriture 26 par la ligne 54 et est décrémenté par une sortie du registre/compteur d'adresses de lecture 28 par la ligne 56. De plus, on peut voir que la valeur emmagasinée dans le registre/compteur d'inventaire 42 représente la quantité instantanée de données présentes dans la mémoire intermédiaire 10.

La sortie du circuit de comparaison 100 est appliquée par la ligne 104 à l'unité de commande d'inventaire 106 et à un circuit ET 108. Le signal de sortie sur la ligne 104 indique que l'inventaire contenu dans la mémoire intermédiaire 10 est supérieur à zéro mais inférieur à la capacité d'emmagasinage totale de la mémoire 10. La sortie du circuit de comparaison 96 est appliquée par la ligne 110 au travers d'un inverseur 112, à l'unité de commande d'inventaire 106 par la ligne 114. La sortie de l'inverseur 112 indique que l'inventaire n'excède pas la valeur de seuil.

L'unité de commande d'inventaire 106 reçoit également le signal TRANSFERT ACHEVE par la ligne 78. La sortie de l'unité de commande d'inventaire 106 génère le signal ECHANTILLONNAGE ECRITURE par la ligne 46 qui est raccordée à la mémoire intermédiaire 10 et au registre/compteur d'adresses d'écriture 26. Une deuxième sortie de l'unité de commande d'inventaire 106 délivre le signal REQUETE TRANSFERT MEMOIRE INTERMEDIAIRE appliqué par la ligne 116 au processeur 12 par l'intermédiaire de l'interface de canaux 62.

En fonctionnement, l'unité de commande d'inventaire 106 permet l'introduction de données dans la mémoire intermédiaire 10 jusqu'à ce que la quantité des données soit égale à la valeur de seuil. Initialement, la valeur d'inventaire des données emmagasinées dans la mémoire intermédiaire 10 est nulle comme celle du contenu du registre/compteur d'adresses d'écriture 26 et du registre/compteur d'adresses de lecture 28. L'unité de commande d'inventaire 106 délivrera un signal REQUETE MEMOIRE INTERMEDIAIRE pour remplir la mémoire intermédiaire 10. A mesure que chaque signal de transfert issu de l'unité de commande d'inventaire 106 est généré, un signal ECHANTILLONNAGE ECRITURE est généré par l'unité de commande d'inventaire 106 pour placer l'adresse d'écriture du registre/compteur d'adresses d'écriture 26 dans un état de synchronisation approprié pendant le cycle d'écriture. De plus, le registre/compteur d'adresses d'écriture 26 et le registre/compteur d'inventaire 42 sont incrémentés. Ce processus de requête de données du processeur 12 se poursuit jusqu'à ce que la quantité de données contenue dans la mémoire intermédiaire 10 ou l'inventaire soit égal à la valeur de seuil.

Lorsque la valeur de l'inventaire est égale à la valeur de seuil, le circuit de comparaison 96 génère le signal INVENTAIRE EGAL SEUIL par la ligne 120 pour application à un dispositif de commande 122 qui délivre un signal MARCHE par la ligne 124 au circuit ET 74. La sortie de l'unité de commande du dispositif 122 est combinée avec la sortie du registre d'ordres 70 par le circuit ET 74 pour appliquer un ordre par le bus de données 76 à l'unité de commande de dispositif 64. Cet ordre appliqué à l'unité de commande 64, lorsque le dispositif E/S 14 est un dispositif à bande magnétique, indique au dispositif E/S 14 qu'il doit commencer à accélérer la bande. Lorsque la bande magnétique a été accélérée à la vitesse appropriée, l'unité de commande de dispositif 64 génère le signal REQUETE TRANSFERT DISPOSITIF par la ligne 130 raccordée au circuit ET 108. Etant donné que l'inventaire à cet instant n'est pas complet et qu'il s'agit de la valeur de seuil qui est inférieure à la capacité maximale de la mémoire intermédiaire 10, une sortie est délivrée à partir du circuit de comparaison 100 par la ligne 104 au circuit ET 108. Le circuit ET 108 génère donc une sortie appliquée à une unité de commande de transfert 132.

L'unité de commande de transfert 132 génère le signal ECHANTILLONNAGE LECTURE par la ligne 48 qui est raccordée au registre/compteur d'adresses de lecture 28 pour appliquer une adresse de lecture à la mémoire intermédiaire 10. Le signal ECHANTILLONNAGE LECTURE est également appliqué par la ligne 56 pour décrémenter le registre/compteur d'inventaire 42. La commande de transfert 132 génère également le signal TRANSFERT DONNEES par la ligne 136 pour application à l'unité de commande de dispositif 64. Le signal ECHANTILLONNAGE SORTIE étant généré par l'unité de commande de transfert 132 et appliqué par la ligne 140 à la mémoire intermédiaire 10, des données sont transférées de la mémoire intermédiaire 10 par le bus de données 18, à l'unité de commande de dispositif 64 et finalement, au dispositif E/S 14.

Pendant le transfert des données au dispositif E/S 14, la valeur de seuil peut être dynamiquement modifiée pour faire varier la quantité de données d'inventaire maintenue dans la mémoire intermédiaire 10 pendant le fonctionnement du système. Tandis que l'unité de commande de transfert 132 provoque la délivrance de données par la mémoire intermédiaire 10, l'unité de commande d'inventaire 106 commande l'introduction de données issues du processeur 12 dans la mémoire intermédiaire 10. La commande de transfert 132 et la commande d'inventaire 106 maintiennent donc la valeur de l'inventaire précédemment sélectionné par programme au travers du registre 92 tout en délivrant encore suffisamment de données de la mémoire intermédiaire 10 au dispositif E/S 14.

En résumé, le circuit de commande 40 (figure 1) comprend les circuits de comparaison 96 et 100, l'unité de commande d'inventaire 106, l'unité de commande de dispositif 122 et l'unité de commande de transfert 132. Le circuit de comparaison 100 compare le contenu du registre/compteur d'inventaire 42 à la valeur de seuil emmagasinée dans le registre 92, pour maintenir l'inventaire à la valeur présélectionnée dans la mémoire intermédiaire 10 et pour sortir des données de la mémoire intermédiaire 10 lorsque la valeur d'inventaire est égale à la valeur de seuil. Bien que le circuit de commande 40 (figure 1) ait été représenté dans la figure 2 sous la forme de dispositif logique particulier, il est évident que les fonctions assurées par le circuit de commande 40 pourraient également l'être par un microprocesseur.

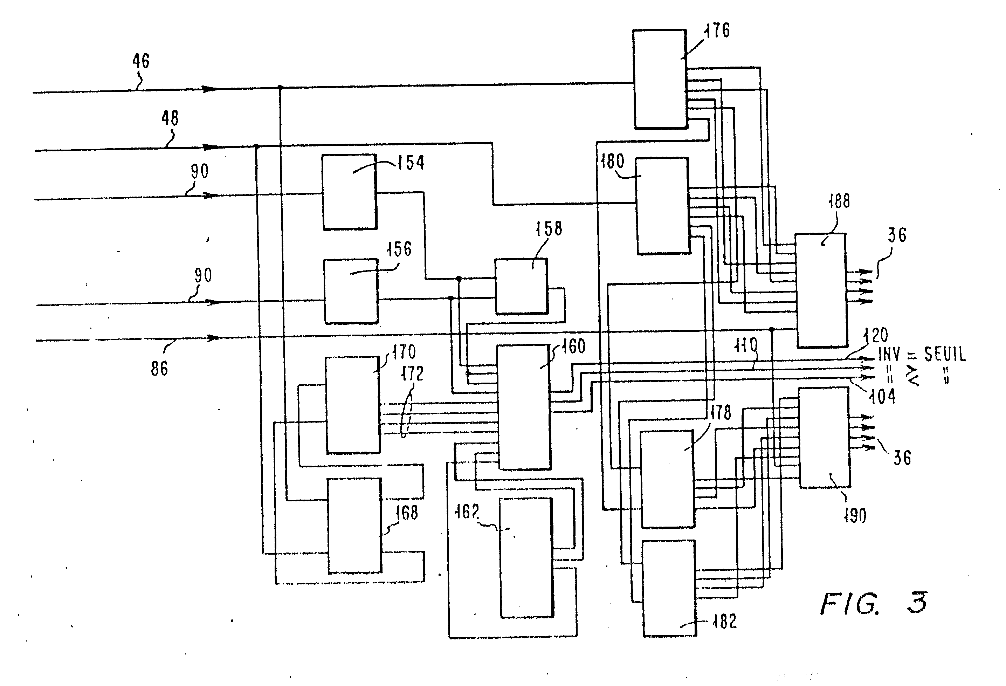

La figure 3 représente un schéma logique détaillé d'une partie de la figure 2 comprenant le registre/compteur d'adresses d'écriture 26, le registre/compteur d'adresses d'écriture 28, le commutateur 30, le registre/compteur d'inventaire 42, le registre 92 et les circuits de comparaison 96 et 100. Les bits des données de la valeur de seuil sont appliqués par les lignes 90 aux bascules 154 et 156 représentant le registre 92 de la figure 2. La sortie des bascules 154 et 156 est appliquée au travers d'un circuit ET 158 et directement à un comparateur 160 qui est interconnecté à un comparateur 162. Les comparateurs 160 et 162 sont des comparateurs à 4 bits. Les comparateurs 160 et 162 représentent les circuits de comparaison 96 et 100 de la figure 2.

Le signal ECHANTILLONNAGE ECRITURE par la ligne 46 et le signal ECHANTILLONNAGE LECTURE par la ligne 48 sont appliqués à un compteur 168 dont la sortie est appliquée à un compteur 170. Les compteurs 168 et 170 sont des compteurs/décompteurs binaires synchrones et représentent le registre/compteur d'inventaire 42 (figure 2). La sortie du compteur 170 est appliquée par les lignes 172 au comparateur 160 dont la sortie par la ligne 104 génère le signal INVENTAIRE INFERIEUR AU SEUIL, par la ligne 110 le signal INVENTAIRE SUPERIEUR AU SEUIL et par la ligne 120 le signal INVENTAIRE EGAL SEUIL.

Le signal ECHANTILLONNAGE ECRITURE est appliqué par la ligne 46 à un compteur 176 dont la sortie est raccordée à un compteur 178. Les compteurs 176 et 178 sont des compteurs binaires. Les compteurs 176 et 178 représentent le registre/compteur d'adresses d'écriture 26 (figure 2). Le signal ECHANTILLONNAGE LECTURE est appliqué par la ligne 48 à un compteur 180 dont la sortie est appliquée à un compteur 182. Les compteurs 180 et 182 sont des compteurs binaires et représentent le registre/compteur d'adresses de lecture 28 (figure 2).

Les sorties des compteurs 176 et 180 sont appliquées à un multiplexeur 188. Les sorties des compteurs 178 et 182 sont appliquées à un multiplexeur 190. Les multiplexeurs 188 et 190 sont des multiplexeurs/sélecteurs de données du type 2 lignes à 1 ligne et représentent le commutateur 30 (figure 2). Ils génèrent les bits d'adresses pour la mémoire intermédiaire 10 par le bus de données 36. Les sorties des multiplexeurs 188 et 190 sont échantillonnés en utilisant les signaux LECTURE/ECRITURE appliqués par la ligne 86 depuis l'horloge 82 (figure 2).

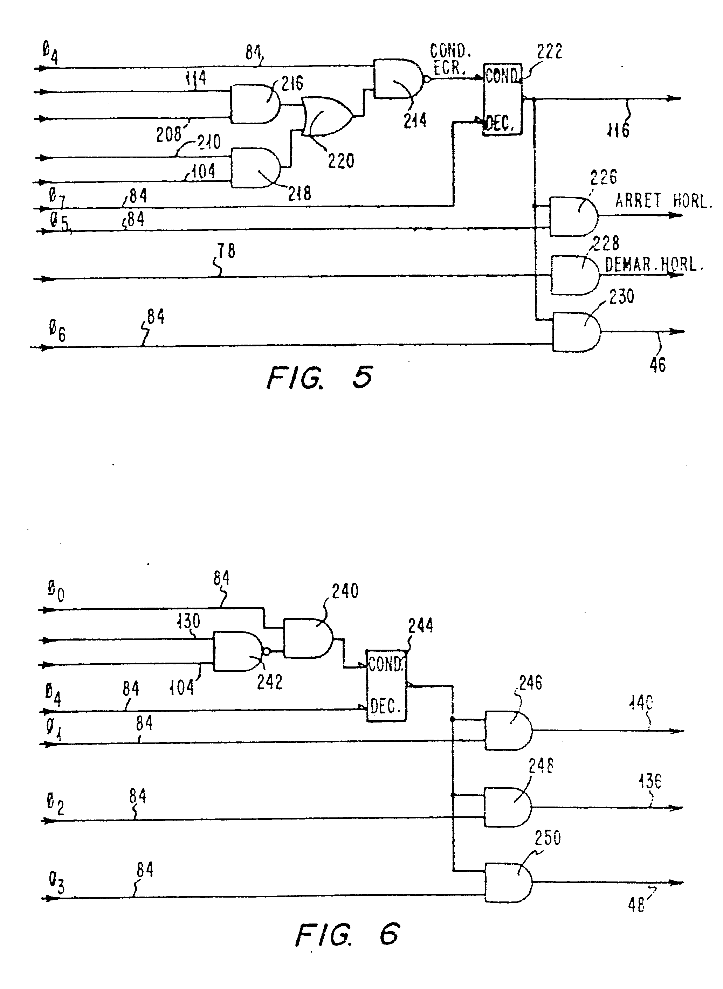

La figure 4 représente le circuit logique correspondant à l'unité de commande de dispositif 122 (figure 2). Le signal INVENTAIRE EGAL SEUIL est appliqué par la ligne 120 à une porte ET 194 en même temps que le signal de chronologie PHASE 4 par la ligne 84. La sortie de la porte ET 194 est appliquée à une bascule 196 qui reçoit également le signal de chronologie PHASE 6 de l'horloge 82 (figure 2). La sortie de la bascule 196 est appliquée à une porte ET 200 qui reçoit également comme entrée le signal de chronologie PHASE 5 par la ligne 84. La sortie de la porte ET 200 génère le signal MARCHE appliqué par la ligne 124 au circuit ET 174 (figure 2). La sortie d'une porte ET 200 est également appliquée à une bascule 202 qui reçoit également un signal de restauration par la ligne 204 depuis l'horloge 82. La sortie de la bascule 202 génère le signal MARCHE BASCULE par un inverseur 206 et la ligne 208 et le signal MARCHE BASCULE par la ligne 210 qui est raccordée à la porte ET 194.

La figure 5 représente le circuit logique correspondant à l'unité de commande d'inventaire 106 (figure 2). Un signal de chronologie Phase 4 est appliqué par la ligne 84 à une porte ET 214. Le signal INVENTAIRE DIFFERENT DU SEUIL est appliqué par la ligne 114 à une porte ET 216 en même temps que le signal MARCHE BASCULE par la ligne 208. Le signal MARCHE BASCULE est appliqué par la ligne 210 à une porte ET 218 en même temps que le signal INVENTAIRE SUPERIEUR A ZERO INFERIEUR A PLEIN est appliqué par la ligne 104. La sortie des portes ET 216 et 128 est appliquée à une porte OU 220 dont la sortie est appliquée à la porte ET 214. La sortie d'une porte ET 214 génère le signal CONDITIONNEMENT ECRITURE qui est appliqué à une bascule 222 dont la sortie génère le signal REQUETE TRANSFERT MEMOIRE INTERMEDIAIRE par la ligne 116. La bascule 222 reçoit également un signal de déconditionnement par la ligne 84 du signal d'horloge Phase 7 issu de l'horloge 82 (figure 2).

La sortie de la bascule 222 est appliquée à une porte ET 226 qui reçoit également le signal de chronologie Phase 5 par la ligne 84 pour générer le signal ARRET HORLOGE appliqué à l'horloge 82 (figure 2). Le signal TRANSFERT ACHEVE est appliqué par la ligne 78 à une porte ET 228 pour générer le signal DEMARRAGE HORLOGE appliqué à l'horloge 82 (figure 2). La sortie de la bascule 222 est également appliquée à une porte ET 230 qui reçoit également le signal d'horloge Phase 6 par la ligne 86 pour générer le signal ECHANTILLONNAGE ECRITURE par la ligne 46.

La figure 6 représente le circuit logique correspondant à l'unité de commande de transfert 132 (figure 2). Le signal CONDITIONNEMENT LECTURE, Phase 0, est appliqué par la ligne 84 à une porte ET 240. Le signal REQUETE TRANSFERT DISPOSITIF est appliqué par la ligne 130 en même temps que le signal INVENTAIRE SUPERIEUR A ZERO INFERIEUR A PLEIN par la ligne 104, à une porte ET 242. La sortie de la porte ET 242 est appliquée à la porte ET 240 dont la sortie est appliquée à la bascule 244 qui reçoit également comme entrée le signal de chronologie Phase 4 par la ligne 84. La sortie de la bascule 244 est appliquée aux portes ET 246, 248 et 250. La porte ET 246 reçoit également le signal de chronologie Phase 1 par la ligne 84 pour générer le signal ECHANTILLONNAGE SORTIE par la ligne 140. La porte ET 248 reçoit également le signal de chronologie Phase 2 par la ligne 84 pour générer le signal TRANSFERT DONNÉES par la ligne 136. La porte ET 250 reçoit le signal de chronologie Phase 3 par la ligne 84 pour générer le signal ECHANTILLONNAGE LECTURE par la ligne 48.

Bien que le dispositif de la présente invention ait été décrit relativement à l'exécution d'une opération d'écriture dans un dispositif E/S, il est évident que le présent dispositif à mémoire intermédiaire peut également être utilisé pour exécuter une opération de lecture dans un processeur. Etant donné que le délai induit par la mémoire intermédiaire lors de l'exécution d'une opération de lecture dans un processeur n'est pas aussi significatif que dans le cas d'une opération d'écriture, il est évident que les avantages apportés par la présente invention sont maintenus lors de l'exécution d'opérations de lecture dans un processeur.

**Revendications**

1. Dispositif à mémoire intermédiaire de données de capacité variable contrôlant le transfert des données entre un processeur (12) qui génère des signaux de commande, et un dispositif d'entrée/sortie (E/S) (14), comportant un moyen d'emmagasinage de données (10), disposé entre le processeur et le dispositif E/S pour recevoir des données fournies par le processeur et transmettre des données au dispositif E/S et assurer ainsi le transfert de données du processeur au dispositif E/S, comprenant :

un moyen de seuil (92) définissant un seuil d'emmagasinage de données correspondant à un remplissage dudit moyen d'emmagasinage inférieur à la capacité d'emmagasinage maximale de ce dernier,

un premier compteur (26) déterminant la quantité de données transférées dudit processeur audit moyen d'emmagasinage de données,

un deuxième compteur (28) déterminant la quantité de données transmises audit dispositif E/S à partir dudit moyen d'emmagasinage de données,

un moyen d'inventaire (42) pour déterminer la différence entre la quantité de données emmagasinées dans ledit moyen d'emmagasinage de données et la quantité de données transmises au dispositif E/S en réponse auxdits premier et deuxième compteurs, de façon à générer un signal représentant cette différence (98),

ledit dispositif étant caractérisé en ce que :

ledit moyen de seuil fournit un signal de contrôle (94) représentant la capacité d'emmagasinage correspondant audit seuil d'emmagasinage, en réponse à un signal de commande (90) en provenance dudit processeur, déterminant cette capacité,

il comprend en outre :

un moyen de commande de données (96, 106) pour entrer des données dans ledit moyen d'emmagasinage lorsque la quantité de données emmagasinées est inférieure à la quantité de données représentée par ledit signal de contrôle (94),

un moyen de comparaison (100) pour comparer ledit signal de contrôle (94) et ledit signal de différence (98), et générer un signal de transfert (104, 136) lorsque ledit signal de contrôle est égal audit signal de différence, et

un moyen de transfert (64) pour transmettre des données dudit moyen d'emmagasinage audit dispositif E/S, en réponse audit signal de transfert, de sorte qu'une quantité de données prédéterminée est maintenue dans ledit moyen d'emmagasinage pendant que simultanément a lieu le transfert de données entre ledit processeur et ledit dispositif E/S.

2. Dispositif selon la revendication 1, caractérisé en ce que ledit moyen de commande de données comprend un comparateur (96) pour comparer la quantité de données emmagasinée dans ledit moyen d'emmagasinage (10) et la quantité de données représentée par ledit signal de contrôle (94), et commander l'entrée de données dans ledit moyen d'emmagasinage à partir dudit processeur (12).

3. Dispositif selon la revendication 1 ou 2, caractérisé en ce que ledit moyen d'emmagasinage de données (10) comprend un registre de données du type « premier entré-premier sorti ».

4. Dispositif selon la revendication 1 ou 2, caractérisé en ce que ledit moyen d'emmagasinage de données (10) comprend une mémoire à accès aléatoire.

5. Dispositif selon l'une quelconque des revendications 1 à 4, caractérisé en ce que ledit dispositif E/S comprend une unité à bande magnétique.

**Claims**

1. Variable capacity buffer memory device controlling data transfer between a processor (12) which generates control signals, and an input/output device (I/O) (14) comprising a data storage means (10) situated between the processor and the I/O device in order to receive the data supplied by the processor and to transmit the data to the I/O device thus handling the data transfer from processor the I/O device, comprising :

a threshold means (92) defining a data storage threshold corresponding to a filling of said storage means that is less than the maximum storage capacity of the latter,

a first counter (26) determining the quantity of data transferred from said processor to said data storage means,

a second counter (28) determining the quantity of data transmitted to said I/O device from said data storage means,

an inventory means (42) for determining the difference between the quantity of data stored in said data storage means and the quantity of data transmitted to the I/O device in response to said first and second counters, in order to generate a signal which represents this difference (98), said device being characterized in that:

said threshold means provides a capacity control signal (94) representing the storage capacity corresponding to said storage threshold, in response to a control signal (90) coming from said processor, which determines this capacity,

it also comprises:

a data control means (96, 106) for entering data into said storage means when the quantity of stored data is less than the quantity of data represented by said capacity control signal (94),

a comparison means (100) for comparing said capacity control signal (94) and said difference signal (98) and to generate a transfer signal (104, 136) when said capacity control signal is equal to said difference signal, and

a transfer means (64) for transmitting the data from said storage means to said I/O device in response to said transfer signal, so that a predetermined quantity of data is maintained in said storage means while the transfer of data between said processor and said I/O device takes place simultaneously.

2. Device according to claim 1, characterized in that said data control means comprises a comparator (96) for comparing the quantity of stored data in said storage means (10) and the quantity of data represented by said capacity control signal (94) and to control the input of data into said storage mechanism from said processor (12).

3. Device according to claim 1 or 2, characterized in that said data storage means (10) comprises a data register of the type, « first in, first out ».

4. Device according to claim 1 or 2, characterized in that said data storage means (10) comprises a random access memory.

5. Device according to any one of claims 1 to 4, characterized in that said I/O device comprises a tape recording unit.

**Ansprüche**

1. Vorrichtung zum Steuern der Datenübertragung zwischen einem als Steuersignalgenerator fungierenden Prozessor (12) und einer Eingabe-/Ausgabeeinrichtung (14)

mit einem zwischen Prozessor und Eingabe-/Ausgabeeinrichtung angeordneten Datenpufferspeicher (10) variabler Kapazität zum Empfang der vom Prozessor gelieferten Daten und deren Weiterleitung an die Eingabe-/Ausgabeeinrichtung, um so die Datenübertragung zwischen Prozessor und Eingabe-/Ausgabeeinrichtung zu gewährleisten,

weiterhin mit einer Schwellwerteinheit (92), die eine einer Füllung des Datenpufferspeichers entsprechende, unter seiner Speicherkapazitätsobergrenze liegende Datenspeicherschwelle definiert,

mit einem ersten Zähler (26) zum Zählen der vom Prozessor zum Datenpufferspeicher übertragenen Datenmenge,

mit einem zweiten Zähler (28) zum Zählen der vom Datenpufferspeicher zur Eingabe-/Ausgabeeinrichtung übertragenen Datenmenge und

mit einem Bestandsregister (42), das aufgrund der Signale vom ersten Zähler (26) und zweiten Zähler (28) die Differenz zwischen der im Datenpufferspeicher gespeicherten und der von dort zur Eingabe-/Ausgabeeinrichtung übertragenen Datenmenge feststellt und ein entsprechendes Differenzsignal (98) erzeugt, dadurch gekennzeichnet, daß

die Schwellwerteinheit (92) aufgrund eines vom Prozessor gelieferten, den genutzten Kapazitätsanteil des Datenpufferspeichers bestimmenden Signals eine die Speicherschwelle darstellendes Steuersignal (94) liefert,

eine Datenflußsteuerung (96, 106) zur Eingabe von Daten in den Datenpufferspeicher, wenn die dort gespeicherte Datenmenge unter dem dem Steuersignal (94) entsprechenden Schwellwert liegt,

ein Vergleicher (100) zum Vergleich des Steuersignales (94) mit dem Differenzsignal (98) und zum Erzeugen eines Datenübertragungssignales (104, 136) bei Übereinstimmung der verglichenen Signale,

und eine Übertragungseinheit (64) vorgesehen sind, die aufgrund des Datenübertragungssignales Daten aus dem Datenpufferspeicher an die Eingabe-/Ausgabeeinheit überträgt, so daß eine bestimmte Datenmenge im Datenpufferspeicher zurückgehalten wird, während gleichzeitig Daten zwischen dem Prozessor und der Eingabe-/Ausgabeeinheit übertragen werden.

2. Vorrichtung nach Anspruch 1, dadurch gekennzeichnet, daß die genannte Datenflußsteuerung einen Vergleicher (96) zum Vergleichen der im Datenpufferspeicher (10) gespeicherten mit der vom Schwellwertsteuersignal (94) definierten Datenmenge und zum entsprechenden Steuern der Datenübertragung vom Prozessor zum Datenpufferspeicher enthält.

3. Vorrichtung nach Anspruch 1 oder 2, dadurch gekennzeichnet, daß der Datenpufferspeicher (10) ein nach dem Prinzip « First in - first out » betriebenes Register enthält.

4. Vorrichtung nach Anspruch 1 oder 2, dadurch gekennzeichnet, daß der Datenpufferspeicher (10) einen RAM-Speicher umfaßt.

5. Vorrichtung nach einem der Ansprüche 1 bis 4, dadurch gekennzeichnet, daß die Eingabe-/Ausgabeeinrichtung eine Magnetbandeinheit ist.

FIG. 1

FIG. 4

FIG. 2

HAUT    BAS

$\phi_1 \cdots \phi_N$

0 013 347

FIG. 3

INV = SEUIL = AV =

FIG. 5

FIG. 6

4